# EUROPEAN PATENT SPECIFICATION

(11) **EP 0 709 795 B1**
(45) Date of publication and mention of the grant of the patent: **04.11.1998**
(21) Application number: 95110420.7
(22) Date of filing: 04.07.1995
(51) Int. Cl.: G06K 7/06

(54) **Integrated circuit card reading pin module using individual coil spring**
Chipkarten-Leserssteckstiftmodul mit einer individuellen Spiralfeder
Module de broche pour la lecture de cartes à puce comprenant un ressort hélicoidal individuel

(30) Priority: 31.10.1994 KR 9428592
(43) Date of publication of application: 01.05.1996
(73) Proprietor: KD Electronics, Inc., Seoul (KR)
(72) Inventor: Soon Chang, Hong, Kangdong-ku, Seoul (KR)
(74) Representative: Prüfer, Lutz H., Dipl.-Phys.

(56) References cited:
- DE-A- 4 015 092
- US-A- 4 778 982

## Description

The present invention relates in general to an integrated circuit (IC) card reader and, more particularly, to an IC reading pin module using an individual coil spring according to the preamble of claim 1. It can be set in the IC card reader and is coming into contact with the IC contacts of an IC card and thereby is reading out the information recorded in the IC card. An IC reading pin module according to the preamble of claim 1 is known from US 4,778,982.

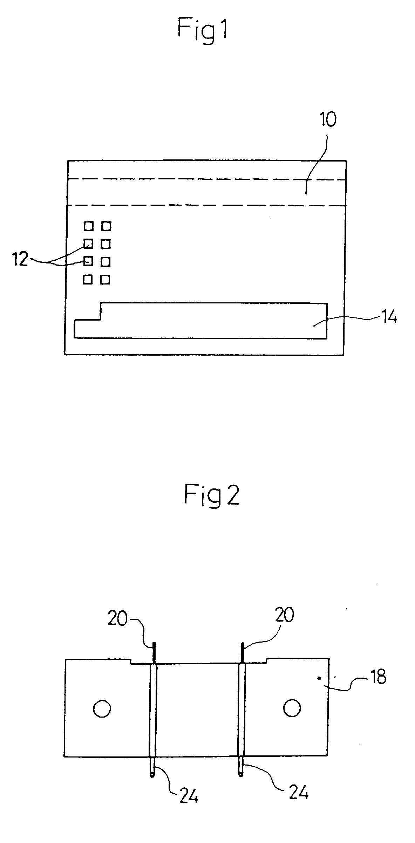

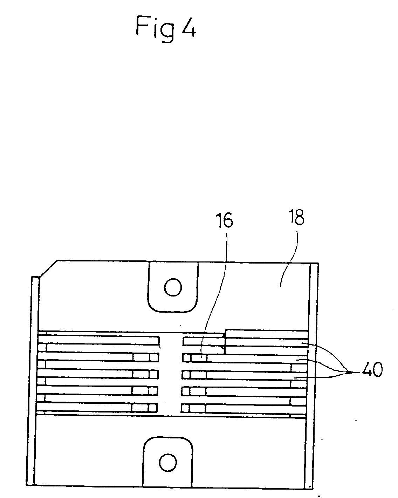

When an IC card of Fig. 1 is inserted into an IC card reader of Fig. 4, the IC reading pin module of the reader descends onto the IC card and comes into contact with the IC contacts 12 of the IC card and thereby reading out the information recorded in the IC card. However, when the card further advances in the IC card reader by the rotating force of the motor while keeping the contact with the reading pin module of the reader, a plurality of scratches are formed on the IC contacts 12 of the card. In addition, frictional abrasion is generated on both the IC card and the reading pin module. Due to the above scratches and frictional abrasion, the durability of the reading pin module will be reduced and an error will be generated in the IC card reading operation. As the IC reading pins of the module continuously contact with the plurality of IC contacts 12 of the card while the card slides in the reader to read out the information recorded in the card, the communication voltage flowing in the reader causes a short and lets the IC card be out of use. In Fig. 1 showing the typical IC card, the reference numerals 10 and 14 denote a magnetic stripe and an embossed region of the card respectively. In Fig. 4 showing the typical IC card reader, the reference numerals 16, 18 and 40 denote a reading unit, a body and a plate spring respectively.

The IC reading pin module known from US 4,778,982 includes a tube as a one-part housing for the reading pin. The travel of the reading pin within the tube is limited by an annular rib. The annular rib has to be formed after inserting the reading pin into the one-part tube. Therefore, an accurate manufacturing such that a smooth sliding of the pin within the housing is difficult. Therefore, there is the danger of a rough sliding of the reading pin within the tube and a resulting danger of a short lifetime of the module.

It is an object of the present invention to provide an improved IC reading pin module using an individual coil spring overcoming the above-described problems.

This object is achieved by an IC reading pin module according to claim 1.

Further developments of the invention are given in the dependent claims.

It is provided an IC reading pin module using an individual coil spring whose reading pins are biased by their associated compression coil springs and descend onto the IC contacts of an IC card to achieve the point contact between the pins and the IC contacts, thereby generating no scratch on the card, increasing the contact resistance, improving the durability of the module, letting the pins come into smooth contact with the IC contacts due to the coil springs even when the pins are physically deformed and achieving the stable contact between the pins and the IC contacts.

The above and other features and other advantages of embodiments of the present invention will be more clearly understood from the following detailed description of an embodiment taken in conjunction with the accompanying drawings, of which:
Fig. 1 is a schematic view showing a typical IC card;
Fig. 2 is a front view showing IC reading pin modules in accordance with an embodiment of the present invention set in a body,
Fig. 3 is a sectional view of an IC reading pin module using an individual coil spring in accordance with the embodiment of the invention; and
Fig. 4 is a schematic view showing a typical IC card reader.

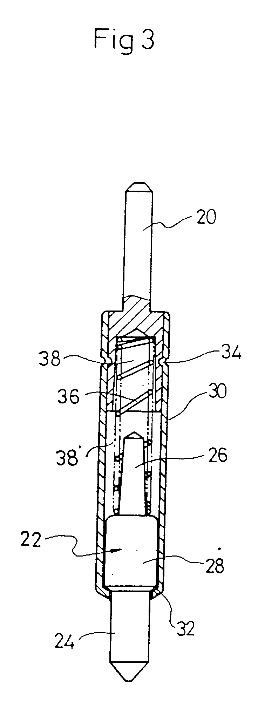

Fig. 2 is a front view showing the IC reading pin modules according to an embodiment of the invention set in a body and Fig. 3 is a sectional view of the IC reading pin module using the individual coil spring according to the embodiment of the invention. As shown in the drawings, each reading pin module has an IC reading pin 22 which is received in a pin housing 30 with a coil spring 36. The reading pin 22 generally comprises three parts, that is, a bottom rod part 24 called the first rod part, a cylindrical middle part 28 and a top rod part 26 called the second rod part. In the reading pin 22, the first rod part 24 will come into direct contact with its associated IC contact of the IC card to read out the information recorded in the card. The cylindrical middle part 28 of the pin 22 slides in the housing 30. When the reading pin 22 is received in the pin housing 30, the coil spring 36 is fitted over the second rod part 26 and biases the pin 22 downward.

The bottom edge of the pin housing 30 is bent inwardly to form a bottom shoulder 32 for stopping the bottom of the cylindrical middle part 28 of the pin 22.

A plug 20 is inserted in the top part of the housing 30 to prevent sudden separation of both the pin 22 and the spring 36 from the housing 30. The bottom of the plug 20 is provided with a center hole 38 communicating with the inner space 38' defined in the cylindrical hollow body of the housing 30. The hole 38 receives the top portion of the spring 36 to stop the top of the spring 36. An annular groove 34 is formed on the outer surface of the plug 20. Due to the annular groove 34, the plug 20 is forcibly fitted into top part of the housing 30 provided with a corresponding annular groove. The reading pin modules having the spring-biased pins 22 are set in the body 18 of the reader such that the pins 22 correspond to their associated IC contacts 12 of the IC card of Fig. 1.

When the IC card is inserted into the card reader, the reading pins 22 of the module come into contact with their associated IC contacts 12 of the card. In this case, the pins 22 are lifted up in the housings 30 while compressing their coil springs 38 by the heights of their associated IC contacts 12.

As described above, the IC reading pins of the module come into stable contact with the IC contacts of the IC card and minimize the contact resistance per unit contact area and thereby improving the contact efficiency and durability of the module.

Although the preferred embodiment of the present invention has been disclosed for illustrative purposes, those skilled in the art will appreciate that various modifications, additions and substitutions are possible, without departing from the scope of the invention as claimed in the accompanying claims.

## Claims

1. An integrated circuit (IC) reading pin module using an individual coil spring comprising:
a reading pin (22) coming into contact with an IC contact (12) of an IC card and reading out the information recorded in said card;
a pin housing (30) receiving the reading pin (22); and
a coil spring (36) biasing said reading pin downward, characterized in that
a plug (20) is fitted into the top of said housing (30) and adapted to prevent sudden separation of both the reading pin (22) and the coil spring (36) from the housing (30); and
said coil spring (36) is fitted over the top part (26) of said reading pin (22).

2. The IC reading pin module according to claim 1, characterized in that said reading pin (22) includes:
a first rod part (24) adapted for selectively coming into contact with an IC contact (12) of an IC card to read out the information recorded in the card;
a cylindrical middle part (28) adapted for sliding in the pin housing (30); and
a second rod part (26) adapted for fitting said coil spring (36) thereon.

3. The IC reading pin module according to claim 1 or 2, characterized in that said pin housing (30) includes:
a cylindrical hollow body (30) receiving a cylindrical middle part (28) of the reading pin (22) therein such that the middle part (28) of the reading pin slides in the body; and
a bottom shoulder (32) formed by bending the bottom edge of said pin housing (30) inwardly, said bottom shoulder (32) being adapted for stopping the bottom of said cylindrical middle part (28) of the reading pin.

4. The IC reading pin module according to one of claims 1 to 3, characterized in that said plug (20) includes:
a center hole (38) formed on the bottom of the plug and adapted for receiving the top portion of said coil spring (36) and stopping the top of the coil spring; and
an annular groove (34) formed on the outer surface of the plug and adapted for engaging with a corresponding groove of the pin housing (30), thereby tightly fitting the plug (20) into the pin housing (30).

## Patentansprüche

1. Lesestiftmodul für integrierte Schaltung (IC), das eine individuelle Schraubenfeder verwendet, mit
einem Lesestift (22), der in Kontakt mit einem IC-Kontakt (12) einer IC-Karte kommt und die Information, die in der Karte aufgezeichnet ist, ausliest,
einem Stiftgehäuse (30), das den Lesestift (22) aufnimmt, und
einer Schraubenfeder (36), die den Lesestift nach unten vorspannt, dadurch gekennzeichnet, daß
ein Stöpsel (20) in die Oberseite des Gehäuses (30) eingesetzt und zum Verhindern einer plötzlichen Trennung von sowohl dem Lesestift (22) als auch der Schraubenfeder (36) von dem Gehäuse (30) angepaßt ist, und
die Schraubenfeder (36) über den oberen Teil (26) des Lesestiftes (22) gesetzt ist.

2. IC-Lesestiftmodul nach Anspruch 1, dadurch gekennzeichnet, daß der Lesestift (22)
ein erstes Stabteil (24), das angepaßt ist zum selektiven Kontaktieren eines IC-Kontaktes (12) einer IC-Karte, um die in der Karte aufgezeichneten Informationen auszulesen,
ein zylindrisches Mittelteil (38), das zum Gleiten in dem Stiftgehäuse (30) angepaßt ist, und
ein zweites Stabteil (26), das zum Setzen der Schraubenfeder (36) auf dieses angepaßt ist,
aufweist.

3. IC-Lesestiftmodul nach Anspruch 1 oder 2, dadurch gekennzeichnet, daß das Stiftgehäuse (30)
einen zylindrischen hohlen Körper (30), der ein zylindrisches Mittelteil (28) des Lesestiftes (22) darin derart aufnimmt, daß der Mittelteil (28) des Lesestiftes in dem Körper gleitet, und
eine Bodenschulter (32), die durch Biegen des Bodenrandes des Stiftgehäuses (30) nach innen ausgebildet ist, wobei die Bodenschulter (32) zum Stoppen des Bodens des zylindrischen Mittelteiles (28) des Lesestiftes angepaßt ist, aufweist.

4. IC-Lesestiftmodul nach einem der Ansprüche 1 bis 3, dadurch gekennzeichnet, daß
der Stöpsel (20)
ein Mittelloch (38), das an dem Boden des Stöpsels ausgebildet und zum Aufnehmen des oberen Abschnittes der Schraubenfeder (36) und zum Stoppen der Oberseite der Schraubenfeder angepaßt ist, und
eine ringförmige Nut (34), die an der äußeren Oberfläche des Stöpsels ausgebildet und zum Eingreifen mit einer entsprechenden Nut des Gehäuses (30) angepaßt ist, wodurch der Stöpsel (20) festsitzend in das Stiftgehäuse (30) eingesetzt ist,
aufweist.

## Revendications

1. Module de broche pour la lecture de cartes à puce comprenant un ressort hélicoïdal individuel, comprenant :
une broche de lecture (22) venant en contact avec un contact (12) d'une carte à puce et lisant les informations enregistrées dans ladite carte ;
un logement de broche (30) recevant la broche de lecture (22) ; et
un ressort hélicoïdal (36) sollicitant ladite broche de lecture vers le bas, caractérisé en ce que
une fiche (20) est ajustée dans le haut dudit logement (30) et adaptée pour empêcher une brusque séparation à la fois de la broche de lecture (22) et du ressort hélicoïdal (36) du logement (30), et en ce que
ledit ressort hélicoïdal (36) est monté au-dessus de la partie supérieure (26) de ladite broche de lecture (22).

2. Module de broche pour la lecture de cartes à puce selon la revendication 1, caractérisé en ce que ladite broche de lecture (22) comprend :
une première partie de tige (24) adaptée pour venir sélectivement en contact avec un contact (12) d'une carte à puce pour lire les informations enregistrées dans la carte ;
une partie centrale cylindrique (28) adaptée pour coulisser dans le logement de broche (30) ; et
une deuxième partie de tige (26) adaptée pour monter sur celle-ci ledit ressort hélicoïdal (36).

3. Module de broche pour la lecture de cartes à puce selon la revendication 1 ou 2, caractérisé en ce que ledit logement de broche (30) comprend :
un corps cylindrique creux (30) recevant dans celui-ci une partie centrale cylindrique (28) de la broche de lecture (22) de telle façon que la partie centrale (28) de la broche de lecture coulisse dans le corps ; et
un rebord inférieur (32) formé en recourbant le bord inférieur dudit logement de broche (30) vers l'intérieur, ledit rebord inférieur (32) étant adapté pour bloquer le fond de ladite partie centrale cylindrique (28) de la broche de lecture.

4. Module de broche pour la lecture de cartes à puce selon l'une quelconque des revendications 1 à 3, caractérisé en ce que ladite fiche (20) comprend:
un trou central (38) formé dans le fond de la fiche et adapté pour recevoir la partie supérieure dudit ressort hélicoïdal (36) et bloquer le haut du ressort hélicoïdal ; et
une rainure annulaire (34) formée sur la surface extérieure de la fiche et adaptée pour venir en prise avec une rainure correspondante du logement de broche (30), ajustant ainsi fermement la fiche (20) dans le logement de broche (30).
